# EUROPÄISCHE PATENTSCHRIFT

(11) **EP 2 762 510 B1**
(45) Veröffentlichungstag und Bekanntmachung des Hinweises auf die Patenterteilung: **21.11.2018**
(21) Anmeldenummer: 13153671.6
(22) Anmeldetag: 01.02.2013
(51) Int. Cl.: C08G 18/40, C08G 18/48, C08G 18/66

(54) **VERBUNDELEMENTE MIT EINEM KERN AUS EMISSIONSARMEM POLYURETHAN SOWIE VERFAHREN ZU DEREN HERSTELLUNG**
COMPOSITE ELEMENTS COMPRISING A CORE OF LOW-EMISSION POLYURETHANE, AND PROCESS FOR THEIR MANUFACTURE
ÉLÉMENT COMPOSITE AVEC UN NOYAU EN POLYURÉTHANE PAUVRE EN ÉMISSIONS AINSI QUE SON PROCÉDÉ DE FABRICATION

(43) Veröffentlichungstag der Anmeldung: 06.08.2014
(73) Patentinhaber: Covestro Deutschland AG, 51373 Leverkusen (DE)
(72) Erfinder: Albach, Rolf, 51061 Köln (DE); Hannig, Frithjof, 40593 Düsseldorf (DE); Reiter, Stephan, 40764 Langenfeld (DE); Fietz, Harald, 51377 Leverkusen (DE); Dietrich, Norbert, 51373 Leverkusen (DE); Breuer, Bernd, 51379 Leverkusen (DE)
(74) Vertreter: Levpat

(56) Entgegenhaltungen:
- EP-A1- 1 428 847
- EP-A1- 1 650 240
- EP-A1- 1 921 097
- DE-A1-102008 025 005
- DE-A1-102009 047 846

## Beschreibung

Die Erfindung betrifft Verbundelemente, die einen Kern aus Polyurethan mit geringen Emissionen enthalten, ein Verfahren zu deren Herstellung und deren Verwendung.

Die Verwendung von Polyharnstoff- und Polyhydrazocarbonamid-Dispersionen in Weichschaumstoffen ist bekannt. Die Dispersionen werden vor allem zur Erreichung besonders vorteilhafter Härte/Rohdichte-Relationen bei sehr niedrigen Rohdichten eingesetzt (DE-A 2519004, EP-A 1650240). In DE-A 2519004 werden neben Weichschaumstoffen mit 30 kg/m³ auch halbharte Schaumstoffe mit Rohdichten von 497 kg/m³ hergestellt.

Neben der vorteilhaften Härte/Rohdichte-Relation tragen solche Dispersionen in Verbindung von Polyesterpolyolen auch zu verbesserter Öl- und Chemikalienbeständigkeit zelliger bis massiver (Polyharnstoff)polyurethane (600-950 kg/m³) z. B. im Automobilbau bei (EP-A 119220). Um für die Schuhindustrie niedrigere Rohdichten zu erreichen, mussten Mikrohohlglaskugeln zugegeben werden (EP-A 1571168). Auch die selektive Verbesserung von Formaldehydemissionen ist beschrieben. Allerdings werden in DE-A 100 2009 047 846 in den Beispielen nur Schaumstoffe im Rohdichtebereich von 53 bis 56 kg/m³ und mit einer Stauchhärte von 5,2 -8,1 kPa offenbart. Verbundelemente mit einem Kern aus verdichteten halbharten Schaumstoffen im für solcheSandwichaufbauten interessanten Rohdichtebereich von 90-350 kg/m³, bevorzugt 100-150 kg/m³, und einer Härte von 20-90 kPa sind bisher nicht beschrieben.

Das Dokument EP 1 428 847 A1 offenbart ein Verfahren zur Erniedrigung von Formaldehydemission aus Polyurethanschaumstoffen (siehe Absatz [0001]). In den Beispielen 3-4 werden PUR-Halbhartschaüme hergestellt, die eine Dichte von 100 kg/m3 aufweisen.In den Beispielen 5-6 werden PUR-Weichschaüme hergestellt, wobei ein Füllstoffpolyol verwendet wird. Die Zusammensetzungen enthalten Polyole sowie 0,5 Teile eines Additiven zur Erniedrigung der Formaldehydemission.

Aufgabe war es, Verbundelemente zur Verfügung zu stellen, die einerseits eine angenehme Schubhaptik aufweisen, robust sind und insbesondere gleichzeitig die für die Verwendung in Innenräumen notwendigen geringen Emissionen an flüchtigen organischen Verbindungen aufweisen. Diese Aufgabe konnte durch die nachfolgend näher beschriebenen erfindungsgemäßen Verbundelemente gelöst werden.

Gegenstand der vorliegenden Anmeldung sind Verbundelemente aus zwei Kunststoffschichten, die über eine Kernschicht aus Isocyanat-basiertem Schaumstoff miteinander verbunden sind, wobei der Schaumstoff eine Rohdichte nach DIN 53420 von 90 - 350 kg/m³, bevorzugt von 90 - 150 kg/m³, besonders bevorzugt von 90-130 kg/m³, aufweist und erhältlich ist aus der Reaktion der Komponenten bestehend aus
A) einer Polyolkomponente bestehend aus
   a) 0-25 Gew.-%, bevorzugt 2 - 8 Gew.%, bezogen auf die Gesamtmenge an Isocyanat-reaktiven Bestandteilen der Komponente A) an Isocyanat-reaktiven kurzkettigen Polyolen und/oder Polyaminen und/oder Polyhydroxyaminen mit Molekulargewichten von 90-350g/mol, bevorzugt 200-300g/mol und einer Funktionalität von 2 bis 6,
   b) 0,1-25 Gew.-%, bevorzugt 1 - 5 Gew.%, bezogen auf die Gesamtmenge der Komponente A), an Polyhydrazocarbonamid-Partikeln oder Polyharnstoff- und Polyhydrazocarbonamidpartikeln,
   c) 50-90 Gew.-%, bezogen auf die Gesamtmenge der Isocyanat-reaktiven Bestandteile der Komponente A), an Isocyanat-reaktiven Polyetherpolyolen und gegebenenfalls Polyesterpolyolen mit Äquivalentgewichten von 500-5000g/mol, bevorzugt 900-2200g/mol und Funktionalitäten von 2 bis 6,
   d) Katalysatoren,
   e) Treibmittel,
   f) gegebenenfalls Hilfs- und Zusatzstoffen,
   und
B) einer Isocyanatkomponente mit einem Gehalt an Isocyanat-Gruppen von 20 bis 33 Gew.-%, bevorzugt von 25 bis 33 Gew.-%,
wobei das Verhältnis der Anzahl der NCO-Gruppen der Komponente B) zu der Anzahl der mit NCO-Gruppen reagierenden Gruppen der Komponente A) 0,7:1 bis 1,2:1 beträgt.

Als Treibmittel wird vorzugsweise Wasser, gegebenenfalls zusammen mit physikalischen Treibmitteln eingesetzt. Bevorzugte Mengen liegen im Bereich von 0,8 bis 2,4 mol Wasser pro dm³ Komponente A.

Die Materialien, die für die beiden Kunststoffschichten eingesetzt werden, können Duromere (wie z.B. Polyurethan, Epoxy), Elastomere (wie z.B. Polyurethane, thermoplastische Elastomere (TPE)), nachvernetzte thermoplastische Polyolefine (TPO) oder Thermoplaste (wie z.B. Polyvinylchloride (PVC), thermoplastische Polyurethane (TPU), Polyamide (PA), Polycarbonate/Acrylnitril-Butadien-Styrole (PC/ABS), Styrol-Maleinsäureanhydridcopolymere (SMA), Polypropylen (PP) und Mischungen daraus) sein. Die verwendeten Materialien können vorzugsweise mit Fasern verstärkt sein.

Die Kunststoffschichten bestehen vorzugsweise aus einem gegebenenfalls nachvernetzten und gegebenenfalls mit Fasern verstärkten, thermoplastischen Kunststoff.

Die Kunststoffschichten bestehen bevorzugt aus einem gegebenenfalls nachvernetzten und gegebenenfalls mit Fasern verstärkten Elastomer.

Ein weiterer Gegenstand der Erfindung ist ein Verfahren zur Herstellung der erfindungsgemäßen Verbundelemente aus zwei Kunststoffschichten, die über eine Kernschicht aus Polyurethanschaumstoff miteinander verbunden sind, wobei die beiden Kunststoffschichten in einem Schritt miteinander über eine Reaktivmischung bestehend aus einer Polyolkomponente A) und einer Isocyanatkomponente B), die zu einem Isocyanat-basierten Schaumstoff mit einer Rohdichte nach DIN 53420 von 90 - 350 kg/m³, bevorzugt von 90 - 150 kg/m³, besonders bevorzugt von 90-130 kg/m³ reagieren, verklebt werden, indem die Kunststoffschichten in eine Form eingebracht werden und vor und/oder nach Schließen der Form, die Reaktivmischung aus der Isocyanatkomponente B) und der Polyolkomponente A) zwischen die beiden Kunststoffschichten injiziert wird, gekennzeichnet dadurch, dass die Reaktivmischung aus den folgenden Komponenten besteht:
A) einer Polyolkomponente bestehend aus
   a) 0-25 Gew.-%, bevorzugt 2-8 Gew.%, bezogen auf die Gesamtmenge der Isocyanat-reaktiven Bestandteile der Komponente A), an kurzkettigen Polyolen und/oder Polyaminen und/oder Polyhydroxyaminen mit Molekulargewichten von 90-350g/mol, bevorzugt 200-300g/mol und Funktionalitäten von 2 bis6,
   b) 0,1-25 Gew.-%, bevorzugt 1 - 5 Gew.%, bezogen auf die Gesamtmenge der Komponente A), an Polyhydrazocarbonamidpartikeln oder Polyharnstoff- und Polyhydrazocarbonamidpartikeln
   c) 50-90 Gew.-%, bezogen auf die Isocyanat-reaktiven Bestandteile der Gesamtmenge der Komponente A), an Polyetherpolyolen und gegebenenfalls Polyesterpolyolen mit Äquivalentgewichten von 500-5000 g/mol, bevorzugt 900-2200 g/mol und Funktionalitäten von 2 bis 6,
   d) Katalysatoren,
   e) Treibmitteln,
   f) gegebenenfalls Hilfs- und Zusatzstoffen,
      und
B) einer Isocyanatkomponente mit einem Gehalt an Isocyanat-Gruppen von 20 bis 33 Gew.-%, bevorzugt von 25 bis 33 Gew.-%,
wobei das Verhältnis der Anzahl der NCO-Gruppen der Komponente B) zu der Anzahl der mit NCO-Gruppen reagierenden Gruppen der Komponente A) 0,7:1 bis 1,2:1 beträgt.

Der Schaumstoff wird bei Durchführung des Verfahrens vorzugsweise auf mindestens 150% der Rohdichte verdichtet, die er bei freiem Aufschäumen erhalten würde.

Der Schaumstoff weist nach Durchführung des Verfahrens eine Stauchhärte von bevorzugt 15-150 kPa (ISO 3386-1-98) auf.

Zur Herstellung der Polyurethanschicht der erfindungsgemäßen Verbundelemente können die Isocyanatkomponente (B) und die gegenüber Isocyanatgruppen reaktiven Verbindungen in der Polyolkomponente (A) in solchen Mengen zur Umsetzung gebracht werden, dass das Äquivalenzverhältnis von NCO-Gruppen aus (B) zur Summe der reaktiven Wasserstoffatome aus (A) 0,7:1 bis 1,2:1, vorzugsweise 0,8:1 bis 1,2:1 und besonders bevorzugt 0,9:1 bis 1,1:1, beträgt.

Das Polyurethan wird üblicherweise nach dem bekannten One-shot-Verfahren erhalten.

Die Umsetzung zum Polyurethan kann beispielsweise durch Handguß, durch Hochdruck- oder Niederdruckmaschinen oder durch RIM-Verfahren (reaction-injection-molding) üblicherweise in offenen oder geschlossenen Formwerkzeugen durchgeführt werden. Geeignete Verarbeitungsmaschinen sind handelsüblich erhältlich (z.B. von den Firmen Isotherm, Hennecke, Kraus Maffei u. a.).

Die Ausgangskomponenten (Isocyanat- und Polyolkomponente) werden üblicherweise in Abhängigkeit vom Anwendungsfall bei einer Temperatur von 10 bis 100°C, vorzugsweise von 20 bis 60°C, gemischt und beispielsweise in das Formwerkzeug eingebracht. Die Vermischung kann im Labormaßstab beispielsweise mittels eines Pendraulik-Rührers durchgeführt werden oder in größerem Maßstab mit üblichen Hochdruckmischköpfen erfolgen.

Die Umsetzung der Reaktivmischung kann beispielsweise in üblichen, bevorzugt temperierbaren und verschließbaren Formen durchgeführt werden. Insbesondere bei der Herstellung von Verbundelementen mit glatter Oberfläche werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Formen kann beispielsweise durch Polieren vorbehandelt werden.

Als Formwerkzeuge zur Herstellung der Verbundelemente können übliche und kommerziell erhältliche Werkzeuge eingesetzt werden, deren Oberfläche beispielsweise aus Stahl, Aluminium, Email, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können, verschließbar sein und zur Ausübung eines Druckes auf das Produkt entsprechend ausgelegt sein. Steht das Formwerkzeug unter Druck, wird vor dem Öffnen der Form normalerweise eine Druckabsenkung durchgeführt (z.B. durch Vorentriegelung und/oder durch gezielte Entlüftung).

Die Umsetzung zu den Polyisocyanat-Polyadditionsprodukten erfolgt üblicherweise bei einer Formtemperatur von 20 bis 220°C, bevorzugt von 20 bis 120°C, besonders bevorzugt von 20 bis 60°C. Die Umsetzung der Reaktivmischung im Formwerkzeug erfolgt erfindungsgemäß in direktem Kontakt mit den Kunststoffschichten. Dies kann beispielsweise dadurch erreicht werden, dass man vor der Umsetzung, wenn es sich bei den Kunststoffschichten um Folien, RIM-Häute oder Häute aus gesinterten thermoplastischen Partikeln handelt, diese bevorzugt frei von Falten in der Form platziert und anschließend die Reaktivmischung in die Form einfüllt und anschließend die Form verschließt. Es ist ebenso bekannt, dass zunächst die Folien oder Häute und gegebenenfalls andere Bauteile in die Form eingelegt werden, danach die Form verschlossen wird und dann die flüssigen Komponenten A) und B) vermischt und in die geschlossene Form injiziert werden.

Bei den Polyisocyanaten, die in der Isocyanatkomponente (B) eingesetzt werden können, handelt es sich vorzugsweise um aliphatische, cycloaliphatische oder aromatische Polyisocyanate. Bevorzugt handelt es sich um bei Raumtemperatur flüssige Di- und/oder Polyisocyanate der Diphenylmethanreihe. Hierzu gehören bei Raumtemperatur flüssige und gegebenenfalls entsprechend modifizierte Gemische aus 4,4'-Diisocyanatodiphenylmethan, 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höheren Homologe enthalten und die in an sich bekannter Weise durch Phosgenierung von Anilin/Formaldehyd-Kondensaten zugänglich sind. Auch Urethan- und/oder Carbodiimid/Uretdiongruppen aufweisende Modifizierungsprodukte dieser Di- und Polyisocyanate sind geeignet. Allophanat- bzw. Biuretgruppen aufweisende Modifizierungsprodukte der genannten Di- und Polyisocyanate sind ebenfalls geeignet. Die Isocyanatkomponente (B) weist vorzugsweise eine mittlere NCO-Funktionalität von 2,1 bis 5,0, vorzugsweise 2,5 bis 3,1 auf.

Die erfindungsgemäß eingesetzten Partikel b) in der Polyolkomponente (A) werden vorzugsweise in Form von Polyol-Dispersionen verwendet. Die Polyole der Dispersion weisen vorzugsweise Äquivalentgewichte von 500 bis 5000g/mol auf, bevorzugt von 900 bis 2200g/mol und bevorzugt Funktionalitäten von 2 bis 6 auf.

Die Polyolkomponente c) erfüllt neben ihrer Funktion als Aufbaukomponente für die Polyurethanmatrix zusätzlich noch die Rolle eines Dispersionsmittels. Bei den zu verwendenden Polyolen kann es sich vorzugsweise um in der Polyurethanchemie an sich bekannte, bei 10 bis 75°C flüssige Polyhydroxypolyether und -polyester handeln. Auch bereits Urethan- oder Harnstoffgruppen enthaltende Polyhydroxylverbindungen sowie gegebenenfalls natürliche Polyole, wie z. B. Rizinusöl, können als Polyolkomponente eingesetzt werden. Selbstverständlich können auch Mischungen der obengenannten Verbindungen, z.B. Mischungen von Polyhydroxypolyethern und -polyestern, eingesetzt werden.

Bei den eingesetzten Polyolen c) handelt es sich bevorzugt um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die erfindungsgemäß eingesetzten Poly(oxyalkylen)polyole aus einer Starterverbindung mit durchschnittlich 3 bis 8 aktiven Wasserstoffatomen und einem oder mehreren Alkylenoxiden hergestellt. Bevorzugte Starterverbindungen sind Moleküle mit drei bis acht Hydroxylgruppen pro Molekül wie Triethanolamin, Glycerin, Trimethylolpropan, Pentaerythrit, Sorbit und Saccharose. Die Starterverbindungen können allein oder im Gemisch, u.a. mit difunktionellen Starterverbindungen wie Diethylenglykol, Dipropylenglykol, Triethylenglykol, Tripropylenglykol, 1,4-Butandiol, 1,6-Hexandiol verwendet werden. Die erfindungsgemäß eingesetzten Polyole c) werden aus einem oder mehreren Alkylenoxiden hergestellt. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen.

Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polykondensationsreaktionen (z.B. zwischen Formaldehyd und Phenolen und/oder Aminen) in situ in den Hydroxylgruppen aufweisenden Verbindungen ablaufen lässt (wie beispielsweise in DE-A 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-A 3 383 351) erhalten werden, sind für das erfindungsgemäße Verfahren als Polyolkomponente c) geeignet. Vertreter der genannten erfindungsgemäß als Ausgangskomponente c) zu verwendenden Verbindungen sind z.B. im Kunststoff-Handbuch, Band VII "Polyurethane", 3. Auflage ", Carl Hanser Verlag, München / Wien, 1993, Seiten 57 - 67 bzw. Seiten 88 - 90 beschrieben.

Bei der Komponente a) handelt es sich bevorzugt um Ethylendiamin, Trimethylolpropan, ortho-Toluylendiamin, Zucker, Sorbit, Diethanolamin, Triethanolamin, Diethyltoluylendiamin, Glyzerin, 1,2-Ethandiol, Butandiol, Isosorbid und kurzkettige Addukte von Alkylenoxiden an Starter, wie z.B. Ethylendiamin, Trimethylolpropan, ortho-Toluylendiamin, Zucker, Sorbit, Diethanolamin, Triethanolamin, Diethyltoluylendiamin, Glyzerin, 1,2-Ethandiol, Butandiol und Isosorbid.

Als Katalysatoren d) können übliche Verbindungen eingesetzt werden, die die Reaktion der Komponente B mit der Komponente A stark beschleunigen. Dabei können an sich bekannte, die Reaktion zwischen Hydroxyl- und Isocyanatgruppen beschleunigenden Katalysatoren verwendet werden. Insbesondere kommen tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylamino-ethylpiperazin, N,N-Dimethylcyclohexylamin, N,N,N',N'-Tetramethyl-1,3-butandiamin, N,N-Dimethylimidazol-β-phenylethylamin, 1,2-Dimethylimidazol oder 2-Methylimidazol. Aminoxide sind als Katalysatoren gut bekannt. Auch organische Metallkatalysatoren, insbesondere organische Wismutkatalysatoren, wie z.B. Wismut-(III)- neodecanoat oder organische Zinnkatalysatoren, wie z.B. Zinn-(II)-salze von Carbonsäure wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutylzinndiacetat, Dibutylzinndilaurat, Dibutylzinnmaleat oder Dioctylzinndiacetat können allein oder in Kombination mit den tertiären Aminen verwendet werden. In Frage kommen insbesondere solche katalytisch wirkenden Substanzen, die Isocyanat-reaktive Gruppen aufweisen und die zu einem möglichst geringen Fogging, d. h. zu einer möglichst geringen Abgabe von flüchtigen Verbindungen aus dem Schaumstoff, auch bei erhöhten Temperaturen bis 120°C führen, und Alkanolaminverbindungen wie Triethanolamin, Tris-isopropanolamin, N-Methyl- und N-Ethyldiethanolamin und Dimethylethanolamin. Als Katalysatoren kommen weiter in Betracht: Aminoxide, Bis-(2-dimethylaminoethyl)ether, Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxypropyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Bevorzugt werden gegenüber Isocyanaten reaktionsfähige tertiäre Amine wie beispielsweise N,N-Dimethylaminopropylamin, Bis-(Dimethyaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyldipropanolamin, N,N,N'-Trimethyl-N'-hydroxyethyl-bisaminoethyl-ether, N,N-Dimethylaminopropylharnstoff, N-(2-Hydroxypropyl)-imidazol, N-(2-Hydroxyethyl)-imidazol, N-(2-Aminopropyl)-imidazol, 2-((Dimethylamino)ethyl)methylaminopropanol, 1,1'((3-(Dimethylamino)propyl)imino)bis-2-propanol und/oder die in EP-A 0 629 607 beschriebenen Umsetzungsprodukte aus Acetessigsäureethylester, Polyetherpolyolen und 1-(Dimethylamino)-3-amino-propan sowie insbesondere das Tallölsäure-Amidsalz des N,N-Dimethylaminopropylamins verwendet.

Vorzugsweise werden 0 bis 5 Gew.-%, insbesondere 0,3 bis 2,0 Gew.-% Katalysator bzw. Katalysatorkombination, bezogen auf die die Komponente (A) eingesetzt. Weitere Vertreter von Katalysatoren sowie Einzelheiten über die Wirkungsweise der Katalysatoren sind im Kunststoff-Handbuch, Band VII "Polyurethane", 3. Auflage ", Carl Hanser Verlag, München / Wien, 1993 auf den Seiten 104 - 110 beschrieben.

Als Treibmittel e) können allgemein bekannte chemisch oder physikalisch wirkende Verbindungen eingesetzt werden. Als chemisch wirkendes Treibmittel kann bevorzugt Wasser und gegebenenfalls Carbamat eingesetzt werden, welches durch Reaktion mit den Isocyanatgruppen Kohlendioxid bildet. Beispiele für physikalische Treibmittel, d. h. solche inerten Verbindungen, die unter den Reaktionsbedingungen verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Es kann aber auch Kohlenstoffdioxid (CO₂) verwendet werden, welches beispielsweise bis zur Grenze seiner chemisch-physikalischen Löslichkeit zu wenigstens einem der Einsatzstoffe zugesetzt werden kann. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Als Hilfs- und/oder Zusatzstoffe f) können Weichmacher, Emulgatoren, Farbmittel, Flammschutzmittel, Stabilisatoren, Füllstoffe, Fasern, z. B. in Form von Geweben und/oder Matten, Zellregler, oberflächenaktive Verbindungen und/oder Stabilisatoren gegen oxidativen, thermischen oder mikrobiellen Abbau oder Alterung eingesetzt werden.

Als Weichmacher und Emulgatoren seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isophthalsäure, Trimellitsäure, Phthalsäureanhydrid, Tetra- und/oder Hexahydrophthalsäureanhydrid, Endomethylentetrahydrophthalsäureanhydrid, Glutarsäureanhydrid, Maleinsäureanhydrid, Fumarsäure und/oder dimeren und/oder trimeren Fettsäuren, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n- Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol. Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden. Bei den Weichmachern kann es sich auch um sogenannte polymere Weichmacher handeln, z.B. um Polyester der Adipin-, Sebacin- und/oder Phthalsäure. Weiter sind auch Alkylsulfonsäureester des Phenols, z.B. Paraffinsulfonsäurephenylester, als Weichmacher verwendbar.

Die erfindungsgemäßen Verbundelemente weisen durch die Verwendung der erfindungsgemäß eingesetzten Partikel b) insbesondere ein deutlich verbessertes Emissionsverhalten auf.

Ein weiterer Gegenstand der vorliegenden Erfindung ist die Verwendung der erfindungsgemäßen Verbundelemente in Bauteilen im Fahrzeug- und Flugzeugbau und in der Bauindustrie, beispielsweise als Armaturenbretter, Türverkleidungen, Hutablagen, Konsolen, Armauflagen, Autositzen, Kopfstützen, Dachhimmel oder Türspiegel.

Die Erfindung soll anhand der nachfolgenden Beispiele näher erläutert werden.

### Beispiele:

Die verwendeten Materialien und Abkürzungen haben die folgende Bedeutung:
∘ Polyol A ist eine Dispersion von 20 Gew.-% eines Feststoffes, hergestellt aus Styrol und Acrylnitril, in Polyalkylenoxid B.
∘ Polyol B ist ein Polyetherpolyol und basiert auf Glyzerin, Propylenoxid und einem Ethylenoxid-Endblock. Das Molekulargewicht beträgt 4800g/mol.
∘ Polyol C ist eine Dispersion von 20 Gew.-% eines Feststoffes, hergestellt aus Toluylendiisocyanat (Isomerengemisch 80:20) und Hydrazinhydrat, in Polyalkylenoxid B.
∘ Polyol D ist eine Dispersion von 20 Gew.-% Ruß in Polyol B.
∘ Polyol E ist ein Polyester auf Basis von Adipinsäure, Trimethylolpropan und Hexandiol mit einer mittleren Funktionalität von 3 und einem Molekularewicht von 1550g/mol.
∘ Polyol F ist ein Umsetzungsprodukt aus Ethylendiamin und 5 Äquivalenten Propylenoxid.
∘ Amin A ist ein handelsübliches Isomerengemisch von Diaminodiethyltoluol.
∘ Amin D ist N-[2-[2-(Dimethylamino)ethoxy]ethyl]-N-methyl-1,3-propandiamin.
∘ Amin E ist Dabco NE 1070 (CAS [31506-43-1]).
∘ Amin F ist 2-[(2-[2-(Dimethylamino)ethoxy]ethyl]-N-methyl-amino]ethanol (CAS [83016-70-0]).
∘ Isocyanat A ist eine MDI-basierte Mischung aus 4,4'- und 2,4'-MDI und deren höheren Homologen, die Carbodiimid modifiziert ist, mit einem NCO-Gehalt von 31,7 Gew.-% und einem Uretdionimingehalt von 3,8 Gew.-%.
∘ Isocyanat B ist ein Prepolymer aus 84 Gew.-% Isocyanat A und 16 Gew.-% Polypropylenglykol (Molekulargewicht 2000g/mol) mit einem Uretdionimingehalt von 11,3 Gew.-%.
∘ Isocyanat C ist eine MDI-basierte Mischung aus 4,4'- und 2,4'-MDI und deren höheren Homologen, die Carbodiimid modifiziert ist, mit einem NCO-Gehalt von 32,0 Gew.-%.

### Herstellung der Polyurethan-Freischäume

Die Herstellung der Schaumstoffe erfolgte in einem konischen Papierbecher mit 0,66 dm³ Volumen. Die Temperatur beider Komponenten (Polyolkomponente und Isocyanatkomponente) betrug 23°C. Die unten angegebenen Mengenverhältnisse wurden so eingestellt, dass die Summe aller Komponenten 60 Gramm betrug. Man vermischte in dem Pappbecher zunächst die Komponenten der Polyolseite (Komponente A) mit einem Pendraulikrührer, gab dann das Isocyanat (Komponente B) zu und verrührte für ca. 10 Sekunden bei 1400 min⁻¹.

Als Startzeit ist der Zeitpunkt definiert, bei dem eine Volumenausdehnung des Gemisches sichtbar wird. Als Abbindezeit ist der Zeitpunkt definiert, zu dem ein in den steigenden Schaum gestecktes Streichholz beim Herausziehen Fäden zieht. Als Steigzeit ist der Zeitpunkt definiert, zu dem keine Relativbewegung von Schaumstoff und Becherkante mehr beobachtet wird.

Zur Bestimmung der "freien Rohdichte" wurde die Kuppe des Schaumstoffes an der Becherkante abgeschnitten. Das Bruttogewicht des mit Schaumstoff gefüllten Bechers wurde gewogen. Davon wurde das zuvor ermittelte Gewicht des leeren Bechers abgezogen. Das Nettogewicht wurde durch das Volumen des Bechers von 0,66 dm³ dividiert, und man erhielt die "freie Rohdichte" in Gramm pro dm³ bzw. kg/m³.

**Tabelle 1: Zusammensetzung der hergestellten Polyurethanschäume und deren gemessene Eigenschaften**

| Komponenten\Beispiele | 1 | Vergleich | 2 | 3 | 4 |
|---|---|---|---|---|---|
| Polyol B [Gew.-%] | 75,11 | 70,35 | 77,08 | 75,05 | 77,08 |
| Polyol E [Gew.-%] | 3,90 | 5,00 | 1,00 | 5,00 | 1,00 |
| Polyol A [Gew.-%] | | 18,00 | | | |
| Polyol C [Gew.-%] | 14,57 | | 15,00 | 15,00 | 15,00 |
| Polyol F [Gew.-%] | 0,97 | 2,00 | 1,00 | | 1,00 |
| Amin A [Gew.-%] | 0,83 | 0,95 | 0,97 | 0,85 | 0,97 |
| Triethanolamin [Gew.-%] | 0,97 | | 1,00 | | 1,00 |
| Diethanolamin [Gew.-%] | | | | 0,4 | |
| Polyol D [Gew.-%] | 0,46 | 0,50 | 0,50 | 0,50 | 0,50 |
| Amin E [Gew.-%] | | 0,90 | 0,80 | 0,80 | 0,80 |
| Amin F [Gew.-%] | | 0,20 | 0,25 | 0,20 | 0,25 |
| Amin D [Gew.-%] | 0,49 | | | | |
| Schaumstabilisator [Gew.-%] | 0,37 | | | 0,1 | |
| Wasser [Gew.-%] | 2,33 | 2,10 | 2,40 | 2,10 | 2,40 |
| Gesamtmenge [Gew.-Teile] | 100,00 | 100,00 | 100,00 | 100,00 | 100,00 |
| Isocyanat C [Gew.-Teile] | | 41,7 | 48,2 | 40,1 | |
| Isocyanat A [Gew.-Teile] | | | | | 49,7 |
| Isocyanat B [Gew.-Teile] | 64,3 | | | | |
| Kennzahl | 105 | 95 | 95 | 95 | 95 |
| Partikel b) [Gew.-%] in Komponente A | 2,9% | 0 | 3,0% | 3,0% | 3,0% |
| Freischäume: | | | | | |
| Startzeit [sec] | 8 | 14 | 6 | | 6 |
| Steigzeit [sec] | 50 | 75 | 49 | | 46 |
| Abbindezeit [sec] | | | 75 | | 80 |
| Freie Rohdichte [kg/m³] | 45 | 68 | 42 | 68 | 44 |
| Rohdichte des Schaumstoffs im Verbund [kg/m³] | 120 | 125 | 120 | 140 | 120 |
| Verdichtungsgrad | 2,67 | 1,84 | 2,86 | 2,06 | 2,73 |
| TVOC (DIN 16000-6) [mg/m³] | 0,285 | 1,853 | 0,925 | 1,118 | 0,96 |
| Stauchhärte bei 40% Kompression Nach DIN 53577 [kPa] | 42 | 41 | 43 | 40 | |
| Zugfestigkeit nach DIN 53571 [kPa] | 412 | 300 | 345 | 289 | |

### Herstellung der Verbundelemente und Messung der Emissionen (TVOC = total volatile organic compounds)

Die Herstellung der Formkörper erfolgte in einer mit einem Deckel verschließbaren, mit einer Teflonfolie ausgekleideten Aluminiumform der Dimension 200 x 200 x 20 mm bei einer Formtemperatur von 45°C bei denen die relevanten Deckschichten in den Boden eingelegt bzw. mit doppelseitigem Klebeband in den Deckel eingeklebt waren.Die Temperatur beider Komponenten (Polyolkomponente und Isocyanatkomponente) betrug 23°C. Man vermischte in einem Pappbecher zunächst die Komponenten der Polyolseite mit einem Pendraulikrührer, gab dann das Isocyanat zu und verrührte für ca. 10 Sekunden. Dann goss man das Gemisch in die offene Form und verschloss diese, wobei die Menge an reagierender Schmelze so gewählt wurde, dass eine mittlere Rohdichte des Schaumes von 120 g/l resultierte. Nach ca. 10 Minuten wurde entformt, und die Verbundelemente wurden für 24 Stunden bei Raumtemperatur gelagert.

Die Probekörper, 4 Platten je (0,2 x 0,2 x 0,04) m³, wurden wie oben beschrieben hergestellt und nach dem Abkühlen in Aluverbundfolie verpackt. Je vier Prüfkörper pro Qualität wurden für 7d bei RT und trockener Luft in einer Ablüftkammer abgelüftet. Der Prüfraum wurde vor Prüfbeginn entsprechend der Prüfvorschrift vorkonditioniert (TBeh. = 65 °C, Luftwechsel max = 1,8 h-1, TTaup. = 10,4 °C). Die Prüfkammer wurde mit den Probekörpern bestückt und verschlossen. Daraufhin wurde das Messprogramm gestartet (TBeh. = 65 °C, Luftwechsel = 0,4 h -1, TTaup. = 10,4 °C). Die Emissionen wurden über für 8,35 Stunden mit Tenax, Thermosorb und DNPH gebunden und danach mittels Gaschromatographie analysiert.

## Patentansprüche

1. Verbundelemente aus zwei Kunststoffschichten, die über eine Kernschicht aus Isocyanat-basiertem Schaumstoff miteinander verbunden sind, wobei der Schaumstoff eine Rohdichte nach DIN 53420 von 90 - 350 kg/m³ aufweist und erhältlich ist aus der Reaktion der Komponenten bestehend aus
A) einer Polyolkomponente bestehend aus
a) 0-25 Gew.-%, bevorzugt 2-8 Gew.-% bezogen auf die Gesamtmenge an Isocyanat-reaktiven Bestandteilen der Komponente A), an Isocyanat-reaktiven kurzkettigen Polyolen und/oder Polyaminen und/oder Polyhydroxyaminen mit einem Molekulargewicht von 90-350g/mol, bevorzugt 200-300g/mol und einer Funktionalität von 2 bis 6,
b) 0,1-25 Gew.-%, bevorzugt 1 - 5 Gew.%, bezogen auf die Gesamtmenge der Komponente A), an Polyhydrazocarbonamid-Partikeln oder Polyharnstoff- und Polyhydrazocarbonamid-Partikeln,
c) 50-90 Gew.-%, bezogen auf die Gesamtmenge der Isocyanat-reaktiven Bestandteile der Komponente A), an Isocyanat-reaktiven Polyetherpolyolen und gegebenenfalls Polyesterpolyolen mit Äquivalentgewichten von 500-5000g/mol, bevorzugt 900-2200g/mol und Funktionalitäten von 2 bis 6,
d) Katalysatoren,
e) Treibmitteln,
f) gegebenenfalls Hilfs- und Zusatzstoffen
und
B) einer Isocyanatkomponente mit einem Gehalt an Isocyanat-Gruppen von 20 und 33 Gew.-%, bevorzugt zwischen 25 und 33 Gew.-%,
wobei das Verhältnis der Anzahl der NCO-Gruppen der Komponente B) zu der Anzahl der mit NCO-Gruppen reagierenden Gruppen der Komponente A) von 0,7:1 bis 1,2:1 beträgt.

2. Verbundelement nach Anspruch 1, wobei die Kunststoffschichten aus einem gegebenenfalls nachvernetzten und gegebenenfalls mit Fasern verstärkten, thermoplastischen Kunststoff bestehen.

3. Verbundelement nach Anspruch 1, wobei die Kunststoffschichten aus einem gegebenenfalls nachvernetzten und gegebenenfalls mit Fasern verstärkten Elastomer bestehen.

4. Verfahren zur Herstellung der erfindungsgemäßen Verbundelemente gemäß Anspruch 1 aus zwei Kunststoffschichten, die über eine Kernschicht aus Isocyanat-basiertem Schaumstoff miteinander verbunden sind, wobei die beiden Kunststoffschichten in einem Schritt miteinander über eine Reaktivmischung bestehend aus einer Polyolkomponente A) und einer Isocyanatkomponente B), die zu einem Schaumstoff mit einer Rohdichte nach DIN 53420 von 90 - 350 kg/m³ reagieren, verklebt werden, indem die Kunststoffschichten in eine Form eingebracht werden und vor und/oder nach Schließen der Form, die Reaktivmischung aus der Isocyanatkomponente B) und der Polyolkomponente A) zwischen die beiden Kunststoffschichten injiziert wird, **dadurch gekennzeichnet, dass** die Reaktivmischung aus den folgenden Komponenten besteht:
A) einer Polyolkomponente bestehend aus
a) 0-25 Gew.-%, bevorzugt 2-8 Gew.-%, bezogen auf die Gesamtmenge der Isocyanat-reaktiven Bestandteile der Komponente A), an Isocyanat-reaktiven kurzkettigen Polyolen und/oder Polyaminen und/oder Polyhydroxyaminen mit einem Molekulargewicht von 100-350g/mol, bevorzugt 200-300g/mol und einer Funktionalität von 2 bis 6,
b) 0,1-25 Gew.-%, bevorzugt 1 - 5 Gew.-%, bezogen auf die Gesamtmenge der Komponente A) an Polyhydrazocarbonamid-Partikeln oder Polyharnstoff- und Polyhydrazocarbonamid-Partikeln
c) 50-90 Gew.-%, bezogen auf die Gesamtmenge der Isocyanat-reaktiven Bestandteile der Komponente A), an Isocyanat-reaktiven Polyetherpolyolen und gegebenenfalls Polyesterpolyolen mit Äquivalentgewichten von 500-5000g/mol, bevorzugt 900-2200g/mol und Funktionalitäten von 2 bis 6,
d) Katalysatoren,
e) Treibmitteln,
f) Hilfs- und Zusatzstoffen
B) undeiner Isocyanatkomponente mit einem Gehalt an Isocyanat-Gruppen von 20 bis 33 Gew.-%, bevorzugt von 25 bis 33 Gew.-%,
wobei das Verhältnis der Anzahl der NCO-Gruppen der Komponente B) zu der Anzahl der mit NCO-Gruppen reagierenden Gruppen der Komponente A) 0,7:1 bis 1,2:1 beträgt.

5. Verfahren gemäß Anspruch 4, wobei der Schaumstoff bei Durchführung des Verfahrens auf mindestens 150% der Rohdichte verdichtet wird, die er bei freiem Aufschäumen erhalten würde.

6. Verfahren gemäß Anspruch 4, wobei der Schaumstoff nach Durchführung des Verfahrens eine Stauchhärte von 20-200 kPa, bevorzugt 20-80 kPa (ISO 3386-1-98) aufweist.

7. Verwendung der Verbundelemente nach Anspruch 1 in Bauteilen im Fahrzeug- und Flugzeugbau und in der Bauindustrie, beispielsweise als Armaturenbretter, Türverkleidungen, Hutablagen, Konsolen, Armauflagen, Autositzen, Kopfstützen, Dachhimmel oder Türspiegel.

## Claims

1. Composite elements made of two plastics layers connected to one another by way of a core layer made of isocyanate-based foam, where the envelope density of the foam in accordance with DIN 53420 is from 90 to 350 kg/m³ and the foam is obtainable from the reaction of the components consisting of
A) a polyol component consisting of
a) from 0 to 25% by weight, preferably from 2 to 8% by weight, based on the total quantity of isocyanate-reactive constituents of component A), of isocyanate-reactive short-chain polyols and/or polyamines and/or polyhydroxyamines with molar mass from 90 to 350 g/mol, preferably from 200 to 300 g/mol, and with functionality from 2 to 6,
b) from 0.1 to 25% by weight, preferably from 1 to 5% by weight, based on the total quantity of component A), of polyhydrazocarbonamide particles or polyurea and polyhydrazocarbonamide particles,
c) from 50 to 90% by weight, based on the total quantity of the isocyanate-reactive constituents of component A), of isocyanate-reactive polyether polyols and optionally polyester polyols with equivalent weights from 500 to 5000 g/mol, preferably from 900 to 2200 g/mol, and functionalities from 2 to 6,
d) catalysts,
e) blowing agents,
f) optionally auxiliaries and additives
and
B) an isocyanate component with from 20 to 33% by weight content of isocyanate groups, preferably from 25 to 33% by weight,
where the ratio of the number of the NCO groups of component B) to the number of the groups of component A) that react with NCO groups is from 0.7:1 to 1.2:1.

2. Composite element according to Claim 1, where the plastics layers consist of an optionally post-crosslinked and optionally fibre-reinforced thermoplastic.

3. Composite element according to Claim 1, where the plastics layers consist of an optionally post-crosslinked and optionally fibre-reinforced elastomer.

4. Process for the production of the composite elements according to Claim 1 of the invention made of two plastics layers connected to one another by way of a core layer made of isocyanate-based foam, where the two plastics layers are adhesive-bonded to one another in a step by way of a reactive mixture consisting of a polyol component A) and of an isocyanate component B) which react to give a foam with envelope density from 90 to 350 kg/m³ in accordance with DIN 53420, in that the plastics layers are introduced into a mould and, before and/or after closing of the mould, the reactive mixture made of the isocyanate component B) and of the polyol component A) is injected between the two plastics layers, **characterized in that** the reactive mixture consists of the following components:
A) a polyol component consisting of
a) from 0 to 25% by weight, preferably from 2 to 8% by weight, based on the total quantity of isocyanate-reactive constituents of component A), of isocyanate-reactive short-chain polyols and/or polyamines and/or polyhydroxyamines with molar mass from 100 to 350 g/mol, preferably from 200 to 300 g/mol, and with functionality from 2 to 6,
b) from 0.1 to 25% by weight, preferably from 1 to 5% by weight, based on the total quantity of component A), of polyhydrazocarbonamide particles or polyurea and polyhydrazocarbonamide particles,
c) from 50 to 90% by weight, based on the total quantity of the isocyanate-reactive constituents of component A), of isocyanate-reactive polyether polyols and optionally polyester polyols with equivalent weights from 500 to 5000 g/mol, preferably from 900 to 2200 g/mol, and functionalities from 2 to 6,
d) catalysts,
e) blowing agents,
f) auxiliaries and additives
B) and an isocyanate component with from 20 to 33% by weight content of isocyanate groups, preferably from 25 to 33% by weight,
where the ratio of the number of the NCO groups of component B) to the number of the groups of component A) that react with NCO groups is from 0.7:1 to 1.2:1.

5. Process according to Claim 4, where during conduct of the process the foam is compacted to at least 150% of the envelope density that it would attain in free foaming.

6. Process according to Claim 4, where the compressive strength of the foam after conduct of the process is from 20 to 200 kPa, preferably from 20 to 80 kPa (ISO 3386-1-98).

7. Use of the composite elements according to Claim 1 in components in vehicle construction and aircraft construction and in the construction industry, for example as dashboards, door cladding, parcel shelves, consoles, armrests, automobile seats, headrests, roof linings or door mirrors.

## Revendications

1. Éléments composites constitués par deux couches de matière plastique, qui sont reliées l'une à l'autre par une couche de noyau en une mousse à base d'isocyanate, la mousse présentant une densité brute selon DIN 53420 de 90 à 350 kg/m³ et pouvant être obtenue par la réaction de composants constitués par :
A) un composant polyol constitué par :
a) 0 à 25 % en poids, de préférence 2 à 8 % en poids, par rapport à la quantité totale des constituants réactifs avec les isocyanates du composant A), de polyols et/ou polyamines et/ou polyhydroxyamines à chaîne courte réactifs avec les isocyanates ayant un poids moléculaire de 90 à 350 g/mol, de préférence de 200 à 300 g/mol, et une fonctionnalité de 2 à 6,
b) 0,1 à 25 % en poids, de préférence 1 à 5 % en poids, par rapport à la quantité totale de composant A), de particules de polyhydrazocarbonamide ou de particules de polyurée et de polyhydrazocarbonamide,
c) 50 à 90 % en poids, par rapport à la quantité totale des constituants réactifs avec les isocyanates du composant A), de polyéther-polyols et éventuellement polyester-polyols réactifs avec les isocyanates ayant des poids équivalents de 500 à 5 000 g/mol, de préférence de 900 à 2 200 g/mol, et des fonctionnalités de 2 à 6,
d) des catalyseurs,
e) des agents gonflants,
f) éventuellement des adjuvants et additifs,
et
B) un composant isocyanate ayant une teneur en groupes isocyanate comprise entre 20 et 33 % en poids, de préférence entre 25 et 33 % en poids,
le rapport entre le nombre de groupes NCO du composant B) et le nombre de groupes réactifs avec les groupes NCO du composant A) étant de 0,7:1 à 1,2:1.

2. Élément composite selon la revendication 1, dans lequel les couches de matière plastique sont constituées par une matière plastique thermoplastique éventuellement post-réticulée et éventuellement renforcée avec des fibres.

3. Élément composite selon la revendication 1, dans lequel les couches de matière plastique sont constituées par un élastomère éventuellement post-réticulé et éventuellement renforcé avec des fibres.

4. Procédé de fabrication d'éléments composites selon l'invention selon la revendication 1, constitués par deux couches de matière plastique, qui sont reliées l'une à l'autre par une couche de noyau en une mousse à base d'isocyanate, les deux couches de matière plastique étant collées l'une à l'autre en une étape par un mélange réactif constitué par un composant polyol A) et un composant isocyanate B), qui réagissent pour former une mousse ayant une densité brute selon DIN 53420 de 90 à 350 kg/m³, par introduction des couches de matière plastique dans un moule et injection du mélange réactif constitué par le composant isocyanate B) et le composant polyol A) entre les deux couches de matière plastique avant et/ou après la fermeture du moule, **caractérisé en ce que** le mélange réactif est constitué par les composants suivants :
A) un composant polyol constitué par :
a) 0 à 25 % en poids, de préférence 2 à 8 % en poids, par rapport à la quantité totale des constituants réactifs avec les isocyanates du composant A), de polyols et/ou polyamines et/ou polyhydroxyamines à chaîne courte réactifs avec les isocyanates ayant un poids moléculaire de 100 à 350 g/mol, de préférence de 200 à 300 g/mol, et une fonctionnalité de 2 à 6,
b) 0,1 à 25 % en poids, de préférence 1 à 5 % en poids, par rapport à la quantité totale de composant A), de particules de polyhydrazocarbonamide ou de particules de polyurée et de polyhydrazocarbonamide,
c) 50 à 90 % en poids, par rapport à la quantité totale des constituants réactifs avec les isocyanates du composant A), de polyéther-polyols et éventuellement polyester-polyols réactifs avec les isocyanates ayant des poids équivalents de 500 à 5 000 g/mol, de préférence de 900 à 2 200 g/mol, et des fonctionnalités de 2 à 6,
d) des catalyseurs,
e) des agents gonflants,
f) des adjuvants et additifs,
et
B) un composant isocyanate ayant une teneur en groupes isocyanate de 20 à 33 % en poids, de préférence de 25 à 33 % en poids,
le rapport entre le nombre de groupes NCO du composant B) et le nombre de groupes réactifs avec les groupes NCO du composant A) étant de 0,7:1 à 1,2:1.

5. Procédé selon la revendication 4, dans lequel la mousse est compactée à au moins 150 % de la densité brute obtenue par moussage libre pendant la réalisation du procédé.

6. Procédé selon la revendication 4, dans lequel la mousse présente après la réalisation du procédé une résistance à la compression de 20 à 200 kPa, de préférence de 20 à 80 kPa (ISO 3386-1-98).

7. Utilisation des éléments composites selon la revendication 1 dans des composants dans la construction de véhicules et d'aéronefs et dans l'industrie du bâtiment, par exemple en tant que tableaux de bord, habillages de portes, tablettes arrières, consoles, manchettes, sièges automobiles, appuie-tête, toits ou rétroviseurs de portières.
